# EUROPEAN PATENT APPLICATION

(11) **EP 1 803 921 A2**
(43) Date of publication of application: **04.07.2007**
(21) Application number: 06026716.8
(22) Date of filing: 22.12.2006
(51) Int. Cl.: F02M 21/02

(54) **Side feeding type external pump for lpg**

(30) Priority: 27.12.2005 KR 20050130680; 27.02.2006 KR 20060018740; 27.02.2006 KR 20060018741
(71) Applicant: KOREA INSTITUTE OF MACHINERY & MATERIALS, Daejeon (KR); Sungshin Industry Co., Ltd, Pyeongtaek-si, Gyeonggi-do (KR)
(72) Inventor: Chang-up, Kim, Daejeon (KR); Kern-Yong, Kang, Daejeon (KR); Jin-Wook, Lee, Daejeon (KR); Chang-Gi, Kim, Daejeon (KR); Chang-Ju, Kim, Sangnok-gu, Ansan-si, Gyeonggi-do (KR)
(74) Representative: Scheele, Friedrich

(57) **Abstract**

A side feeding type external pump for LPG comprises: a fluid feeding section which sucks and discharges working fluid by periodically changing the spatial volume thereof and thereby feeds working fluid; a flow chamber into and from which working fluid is introduced and discharged in a direction tangential to a rotating direction of the fluid feeding section; a rotational force supply section in which a motor for supplying rotational force to the fluid feeding section is installed and which is isolated from the flow chamber; a refrigerant inlet port which is formed in the rotational force supply section to receive a refrigerant and cool the rotational force supply section; and a refrigerant discharge section which is mounted to one end of the rotational force supply section to discharge the refrigerant.

## Description

### BACKGROUND OF THE INVENTION

### Field of the Invention

The present invention relates, in general, to a side feeding type external pump for LPG and, more particularly, to a side feeding type external pump for LPG that has a fluid feeding section which sucks and discharges working fluid by periodically changing a spatial volume thereof, and thereby feeds working fluid, a flow chamber into and from which working fluid is introduced and discharged in a direction tangential to the rotating direction of the fluid feeding section, a rotational force supply section in which a motor for supplying rotational force to the fluid feeding section is built and which is isolated from the flow chamber, a refrigerant inlet port which is formed in the rotational force supply section to receive a refrigerant and cool the rotational force supply section, and a refrigerant discharge section which is mounted to one end of the rotational force supply section to discharge the refrigerant, whereby a working fluid suction direction corresponds to the rotating direction of the pump to improve working fluid suction efficiency, and cooling is made possible thanks to the configuration of the refrigerant inlet port and the refrigerant discharge section.

### Description of the Prior Art

As is well known in the art, a pump is an apparatus which feeds fluid using energy. Pumps are divided into a turbcpump, which supplies kinetic energy to fluid through rotation of a turbine, a positive displacement pump, which sucks and discharges working fluid by periodically changing the spatial volume thereof, and thereby feeds working fluid, and special pumps, which operate in some other way. Among these pumps, the positive displacement pump is employed as a fuel pump for a motor vehicle since it has high hydraulic pressure, even though it has a small amount of working fluid.

These days, an LPLI (liquid phase LPG injection) system for using environment-friendly LPG as a fuel for a motor vehicle has been developed. With regard to the LPLI system, in the conventional art, an internal pump, which is mounted in a fuel tank to inject liquid phase LPG, has been used. However, in the case of the internal pump, if the internal pump is broken down, the fuel tank must be replaced along with the internal pump. Due to this fact, recently, an external pump, which is mounted to a fuel line, has been suggested.

In the case of the external pump, the fuel suction direction is perpendicular to the pump rotation direction. That is to say, if the fuel suction direction is horizontal, since the pump rotation direction is vertical, flow resistance occurs when sucking fuel. Therefore, a problem is caused in that fuel suction efficiency is degraded.

In order to cope with this problem, a side feeding type external pump has been disclosed in the art, in which a fuel suction direction is the same as a pump rotation direction. Nevertheless, in the case of the conventional side feeding type external pump, there is no component part for allowing fuel to cool the motor built in the pump. In this regard, in the case of the internal pump, the motor is cooled by fuel which is charged in the fuel tank, and in the case of the external pump, fuel flows through the external pump and the motor built therein to cool the motor.

Hence, in the case of the conventional side feeding type external pump, since the fuel does not flow through the motor, the motor cannot be appropriately cooled, as a result of which the performance of the motor may be impaired due to overheating.

In order to address this drawback, a cooling method has been disclosed, in which oil is charged in the motor and the heat transmitted to the oil is dissipated to the atmosphere through heat transfer with the outside of the motor. Nonetheless, in this simple cooling method, in which the oil is charged in the motor and the heat absorbed by the oil is dissipated to the atmosphere through the surface of the motor, a limit is imposed on the heat dissipation performance. In particular, when LPG is used as a fuel and the simple cooling method is adopted, due to the characteristic of LPG which is evaporated at a low temperature, cavitation may occur due to the evaporation of LPG. Cavitation is a phenomenon in which a pocket is formed at a certain flow point. If cavitation occurs due to a rise in temperature, the amount of fuel discharged from the pump becomes irregular, by which engine hesitation may result.

### SUMMARY OF THE INVENTION

Accordingly, the present invention has been made keeping in mind the above problems occurring in the prior art, and an object of the present invention is to provide a side feeding type external pump in which the suction direction of fuel, that is, working fluid, corresponds to the rotation direction of the pump, and in which a novel configuration allows the working fluid to flow through the pump, whereby fuel suction efficiency is improved and cooling is enabled to reliably maintain the performance of the pump.

Another object of the present invention is to provide an oil circulation structure for an external pump for LPG in which an oil circulation line is formed in the rotator rotated in the stator of a motor and oil charged in the motor is circulated through the oil circulation line, whereby cooling efficiency is improved and the occurrence of cavitation is prevented even when LPG evaporated at a low temperature is used as a fuel.

Still another object of the present invention is to provide a cooling structure in which thermoelectric elements for performing a cooling function are attached to the surface of a rotational force supply section for producing rotational force and a flow chamber for feeding an LPG fuel, whereby cooling efficiency is improved.

In order to achieve the above object, according to the present invention, there is provided a side feeding type external pump for LPG comprising a fluid feeding section which sucks and discharges working fluid by periodically changing the spatial volume thereof and thereby feeds working fluid; a flow chamber into and from which working fluid is introduced and discharged in a direction tangential to a rotating direction of the fluid feeding section; a rotational force supply section in which a motor for supplying rotational force to the fluid feeding section is built and which is isolated from the flow chamber; a refrigerant inlet port which is formed in the rotational force supply section to receive refrigerant and cool the rotational force supply section; and a refrigerant discharge section which is mounted to one end of the rotational force supply section to discharge the refrigerant.

### BRIEF DESCRIPTION OF THE DRAWINGS

The above and other objects, features and other advantages of the present invention will be more clearly understood from the following detailed description when taken in conjunction with the accompanying drawings, in which:
FIG. 1 is an exploded perspective view illustrating a side feeding type external pump for LPG in accordance with the present invention;
FIG. 2 is a cross-sectional perspective view illustrating a fluid feeding section in accordance with the present invention;
FIG. 3 is a transverse cross-sectional view illustrating a flow chamber in accordance with the present invention;
FIG. 4 is a cross-sectional view illustrating the side feeding type external pump for LPG in accordance with the present invention;
FIG. 5 is a perspective view illustrating a first plate in accordance with the present invention;
FIGs. 6 and 7 are a perspective view and a conceptual view illustrating a first embodiment of an oil cooling structure in accordance with the present invention;
FIG. 8 is a cross-sectional view illustrating the in-use state of the first embodiment of the oil cooling structure in accordance with the present invention;
FIG. 9 is a perspective view illustrating a second embodiment of the oil cooling structure in accordance with the present invention; and
FIG. 10 is a perspective view illustrating a cooling structure using thermoelectric elements in accordance with the present invention.

### DETAILED DESCRIPTION OF THE INVENTION

Reference will now be made in greater detail to a preferred embodiment of the invention, an example of which is illustrated in the accompanying drawings. Wherever possible, the same reference numerals will be used throughout the drawings and the description to refer to the same or like parts.

First, the present invention is directed to a side feeding type external pump in which the suction direction of LPG, that is, working fluid, corresponds to the rotation direction of the pump, and a novel configuration allows the working fluid to flow through the pump, whereby fuel suction efficiency is improved and cooling is enabled to reliably maintain the performance of the pump. Second, the present invention is directed to an oil circulation structure in which an oil circulation line is formed in the rotator installed in a motor of the pump and oil charged in the motor is circulated through the oil circulation line, whereby cooling efficiency is improved. Third, the present invention is directed to a cooling structure in which thermoelectric elements are attached to a flow chamber and/or a rotational force supply section, whereby cooling efficiency is improved.

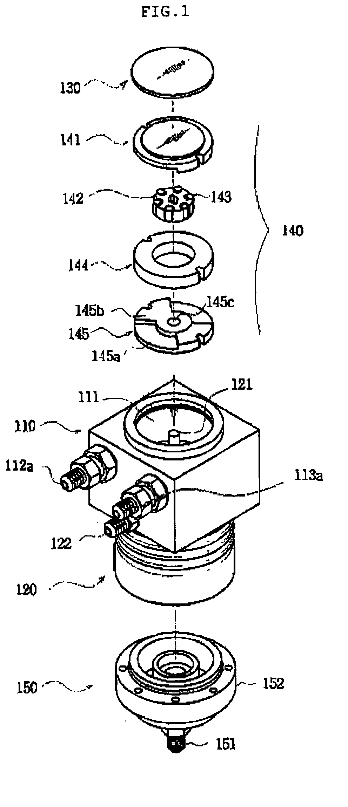

First, a side feeding type external pump for LPG in accordance with the present invention will be described with reference to FIG. 1.

The side feeding type external pump for LPG in accordance with the present invention largely comprises a flow chamber 110 for sucking working fluid and discharging the working fluid toward an engine and a rotational force supply section 120 for supplying rotational force to the flow chamber 110.

A fluid feeding section 140, which sucks and discharges working fluid by periodically changing the spatial volume thereof, is accommodated in the flow chamber 110. The working fluid is introduced into and discharged from the fluid feeding section 140 through an inlet port 112a and an outlet port 113a which are mounted to the wall of the flow chamber 110. A rotational force supply section 120, in which a motor for rotating the fluid feeding section 140 is built, is provided to one end of the flow chamber 110. Due to this construction, as a working fluid suction direction corresponds to the rotation direction of the fluid feeding section 140, flow resistance is decreased, and working fluid suction efficiency is improved.

At this time, the flow chamber 110 and the rotational force supply section 120 are isolated from each other. This functions to prevent the working fluid made to flow by the fluid feeding section 140 from leaking , into the rotational force supply section 120.

Meanwhile, in order to cool the motor built in the rotational force supply section 120, a refrigerant flows through a refrigerant inlet port 122 which is provided to the wall of the rotational force supply section 120 to receive the refrigerant, the motor and a refrigerant discharge section 150 which is mounted to one end of the rotational force supply section 120 to discharge the refrigerant.

In the present invention, the working fluid, that is, the LPG fuel, is used as the refrigerant. That is to say, the working fluid is introduced into the refrigerant inlet port 122 by the internal pressure (of about 2 bars) of a fuel tank filled with the LPG fuel.

Thanks to this construction, the working fluid suction efficiency is improved, and, as the motor is cooled and is prevented from overheating, the functionality of the pump can be reliably maintained.

Because the LPG fuel does not pass through the motor of the pump, which is hot, but passes only through the flow chamber, a substantial rise in the temperature of the fuel, which is otherwise caused in conventional pumps due to the passage of fuel through the pump, does not occur. As a consequence, it is possible to avoid side effects such as abnormal rises in the temperature and pressure of the fuel and deterioration of durability of the pump.

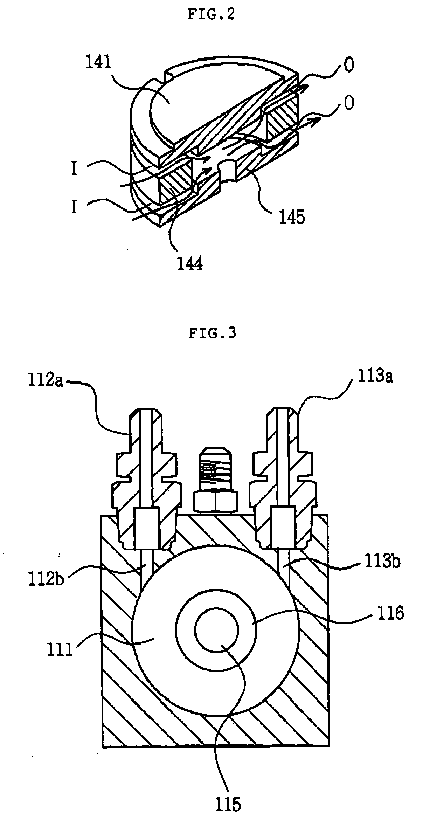

Hereafter, the fluid feeding section 140 will be described with reference to FiGs. 1 and 2.

The fluid feeding section 140 comprises a rotor 142 which is disposed in a donut-shaped cylinder 144, rollers 143 being fitted in the rotor 142 on the outer circumference of the rotor 142. At this time, as fully disclosed in Korean Patent No. 505821 registered in the name of the present applicant, the working fluid is sucked and discharged by the rotation of the rotor 142 and the rollers 143.

These flow paths, through which the working fluid is sucked and discharged, are defined by a first plate 141 and a second plate 145.

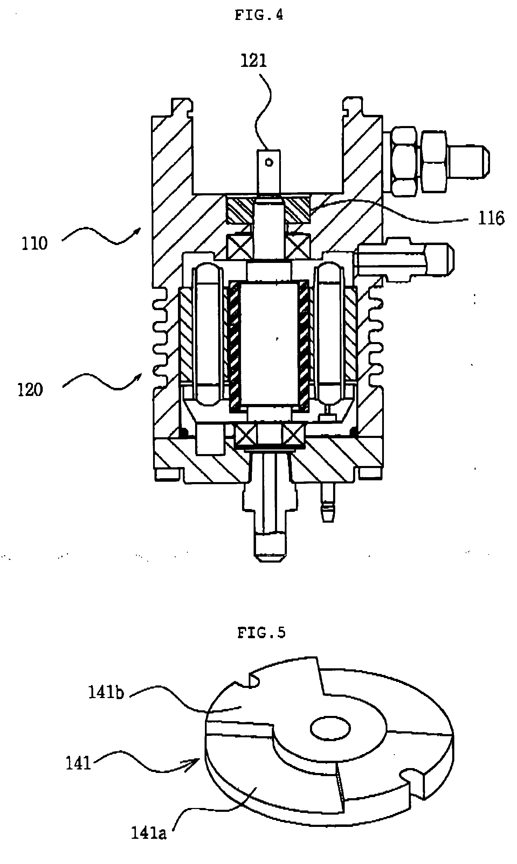

In the first and second plates 141 and 145 which have substantially the same configurations, projecting parts 141b and 145b project on disc-shaped flat parts 141a and 145a. The projecting parts 141b and 145b project on the center portions of the disc-shaped flat parts 141a and 145a to define circular shapes, and project from the circular shapes to the opposite edge portions of the disc-shaped flat parts 141a and 145a to define sector shapes (see FIG. 5). The second plate 145 is defined through the center portion thereof with a hole 145c through which the rotation shaft 121 extending from the motor passes.

The working fluid is fed by the construction of the fluid feeding section 140 as described above, which will be described below in detail with reference to FIG. 2.

FIG. 2 illustrates a state in which the first plate 141, the cylinder 144 and the second plate 145 are assembled with one another. In order to clearly represent the flow of the working fluid, the rotor 142 and the rollers 143 which are disposed in the cylinder 144 are not illustrated in the drawing.

By the rotation of the rotor 142 and the rollers 143, the working fluid is sucked through suction gaps 'I' which are defined between the flat part 141a of the first plate 141 and the cylinder 144 and between the flat part 145a of the second plate 145 and the cylinder 144, and is discharged through discharge gaps '0' which are defined opposite the suction gaps 'I'.

The working fluid, which is fed through the fluid feeding section 140 as described above, is introduced through the inlet port 112a as shown in FIG. 3. Thereafter, the working fluid is introduced into the fluid feeding section 140 through a suction hole 112b which is defined through the wall of the flow chamber 110 to communicate with the inlet port 112a and the upper part of a space 111 for accommodating the fluid feeding section 140. A discharge hole 113b is defined through the wall of the flow chamber 110 beside the suction hole 112b, and communicates with the outlet port 113a and the upper part of the space 111 for accommodating the fluid feeding section 140.

As described above, due to the construction of the inlet port 112a, the suction hole 112b, the outlet port 113a and the discharge hole 113b, the flowing direction of the working fluid is tangential to the rotating direction of the fluid feeding section 140. As a consequence, at the moment that the working fluid comes into contact with the fluid feeding section 140, as the flowing direction of the working fluid corresponds to the rotating direction of the fluid feeding section 140, the working fluid suction efficiency can be improved.

Meanwhile, as described above, the flow chamber 110 and the rotational force supply section 120 are isolated from each other to prevent the working fluid compressed in the flow chamber 110 from leaking. Therefore, since the working fluid does not flow through the rotational force supply section 120, a separate cooling device is required for cooling the rotational force supply section 120.

That is to say, as described above, in the conventional internal pump, since the pump is installed in a fuel tank, the pump is cooled by the fuel charged in the fuel tank. However, in the external pump according to the present invention, separate means for performing a cooling function is needed.

In the present invention, as shown in FIG. 1, by the construction of the refrigerant inlet port 122, which is provided to the wall of the rotational force supply section 120 to receive the refrigerant and the refrigerant discharge section 150, which is mounted to one end of the rotational force supply section 120 to discharge the refrigerant, as the refrigerant flows through the rotational force supply section 120, the rotational force supply section 120 is cooled. The refrigerant discharge section 150 comprises a cover 152 which is mounted to the rotational force supply section 120 and a refrigerant outlet port 151 which is mounted to the cover 152.

In particular, in the present invention, the LPG fuel, that is, the working fluid, is used as the refrigerant. The LPG fuel is charged in the fuel tank and has a filling pressure of about 2 bars. The working fluid, that is, the refrigerant, is introduced into the external pump of the present invention by the filling pressure.

Meanwhile, as described above, the flow chamber 110 and the rotational force supply section 120 are isolated from each other. At this time, as shown in FIG. 3, a rotation shaft passage hole 115 is defined through one end of the flow chamber 110, such that the rotation shaft 121, which extends from the motor disposed in the rotational force supply section 120 and is connected to the fluid feeding section 140, passes through the rotation shaft passage hole 115.

Due to the presence of the rotation shaft passage hole 115, the working fluid flowing in the flow chamber 110 may leak into the rotational force supply section 120. Therefore, in consideration of this fact, it is preferred that a sealing member 116 be fitted into the rotation shaft passage hole 115 to prevent the leakage of the working fluid (see FIG. 4).

Hereafter, oil circulation structures for a cooling purpose according to the present invention will be described.

As is generally known in the art, a motor has a stator installed therein, and a rotator rotates in the stator due to the interaction of current to produce rotational force.

In the present invention, as an oil circulation line is formed in the rotator and oil is circulated through the oil circulation line, cooling performance can be improved, which will be described through respective embodiments.

### Embodiment 1

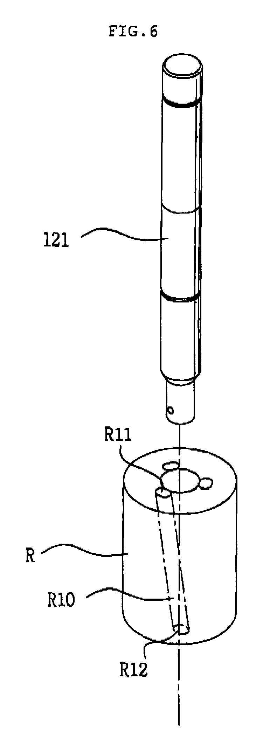

FIG. 6 illustrates a first embodiment, in which an oil circulation line is formed in the shape of a straight line. For the sake of convenience of explanation, in the rotational force supply section 120, only the rotator R and the rotation shaft 121 installed in the rotator R are illustrated.

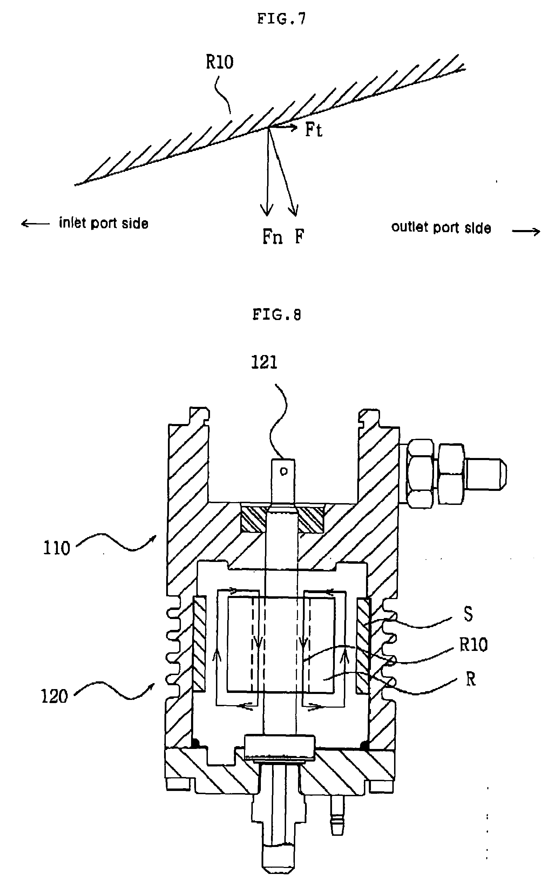

As can be readily seen from FIG. 6, a first circulation line R10 is formed in the rotator R which is rotated by the stator (not shown). The first circulation line R10 is formed in the rotator R to extend in the shape of the straight line. The first circulation line R10 is maintained throughout its length at the same radial distance from the axis of the rotator R, and the positions of an entrance R11 and an exit R12 which are defined on both ends of the rotator R are not aligned with each other in the axial direction, but deviate from the axis of the rotator R. That is to say, the first circulation line R10 is inclined with respect to the axis of the rotator R while being maintained throughout its length at the same radial distance from the axis of the rotator R. Due to the presence of the first circulation line R10 configured in this way, the oil charged in the motor of the rotational force supply section 120 can be circulated. Describing the principle with reference to FIG. 7, when the rotator R, which is formed with the first circulation line R10, is rotated, as shown in FIG. 7, the first circulation line R10 compresses the working fluid in a direction 'F' perpendicular to the inner surface of the first circulation line R10. At this time, the compressing force is divided into horizontal component force Ft and vertical component force Fn, and the working fluid is applied with pushing force by the horizontal component force Ft.

Due to this principle, as the working fluid is pushed and discharged through the exit R12, oil is charged again into vacant spaces through the entrance R11. As this phenomenon is repeated, the oil charged in the motor of the rotational force supply section 120 is circulated through the first circulation line R10.

As a result, as the oil is circulated as described above, oil having received heat performs heat transfer on the surface of the motor of the rotational force supply section 120 with the atmosphere and thus cools. Then, the cooled oil is circulated and introduced into the first circulation line R10 to considerably improve the cooling efficiency of the motor of the rotational force supply section 120 (see FIG. 8).

### Embodiment 2

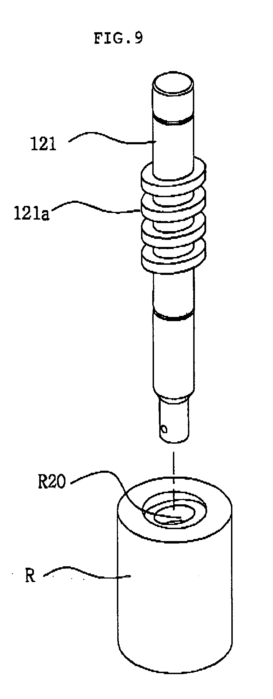

Hereinbelow, a second embodiment, in which an oil circulation line is formed in the shape of an external thread will be descried with reference to FIG. 9.

In this second embodiment, an external thread 121a is formed on the rotation shaft 121 which is fitted into the rotator R, and a second circulation line R20 is formed through the rotator R such that the external thread 121a can be threadedly coupled into the second circulation line R20. The relationship between the external thread 121a and the second circulation line R20 is similar to that between a bolt and a nut into which the bolt is threadedly coupled.

As the external thread 121a of the rotation shaft 121 is threadedly coupled into and rotated in the second circulation line R20, the oil is fed and circulated through the gap defined between the external thread 121a and the second circulation line R20.

Due to this circulation of oil, oil having received heat is circulated to the surface of the rotational force supply section 120 and dissipates the heat to the atmosphere on the surface of the rotational force supply section 120, whereby the cooling of the rotational force supply section 120 is effected.

Meanwhile, it is preferred that the circulation lines of the first and second embodiments be applied to a side feeding type external pump. In the case of a general external pump, as the LPG fuel passes through the general external pump, the general external pump is cooled by the LPG fuel.

However, in the side feeding type external pump as described above, as can be readily seen from FIG. 1, since the LPG fuel is sucked through the inlet port 112a and is then discharged through the outlet port 113a, the LPG fuel does not pass through the rotational force supply section 120. Accordingly, because the cooling effect as attained in the general external pump by the LPG fuel cannot be anticipated in the side feeding type external pump, it is preferred that the circulation line R10 or R20 be formed in the rotator R of the rotational force supply section 120, as in the present invention.

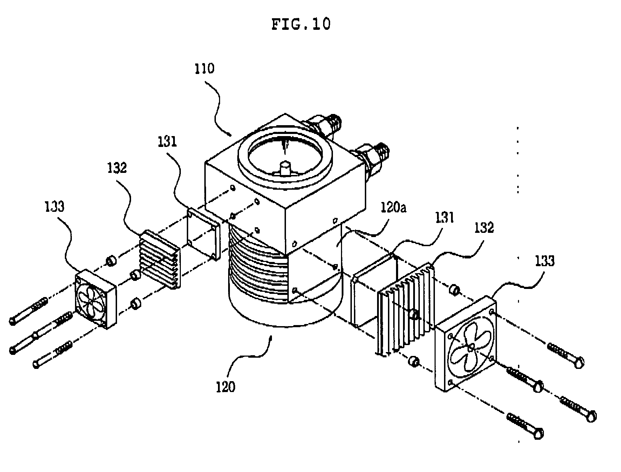

Next, a construction in which a thermoelectric element is installed on the rotational force supply section 120 and/or the flow chamber 110 to improve cooling performance according to the present invention will be described with reference to FIG. 10. First, describing the structure of the rotational force supply section 120, a flattened part 120a is formed on a portion of the surface of the rotational force supply section 120 to be flat. The surface of the rotational force supply section 120 is formed with prominences and depressions to maximally increase the area of contact with the atmosphere. Thanks to this configuration, heat transfer with the atmosphere takes place. In order to attach the thermoelectric element according to the present invention, after a portion of the surface of the rotational force supply section 120 which has depressions and prominences is flattened to define the flattened part 120a, the thermoelectric element 131 is installed on the flattened part 120a. As is well known in the art, the thermoelectric element 131 induces a Peltier effect. That is to say, when joining two metals having different characteristics and then applying a current through the two metals, heat is generated in one junction point, and heat is absorbed in the other junction point. The thermoelectric element 131 performs a cooling function using this phenomenon.

In the present invention, the heat absorption side of the thermoelectric element 131 is mounted to the flattened part 120a, and a heat dissipation plate 132 is mounted to the heat dissipation side of the thermoelectric element 131. The heat dissipation plate 132 functions to dissipate the heat absorbed by the thermoelectric element 131 to the outside. In order to improve the performance of the heat dissipation plate 132, the heat dissipation plate 132 is formed to have depressions and prominences. Meanwhile, in order to promote the dissipation of the heat emitted from the heat dissipation plate 132, it is preferable that a fan 133 be installed on the heat dissipation plate 132.

As described above, in order to cool the heat generated by the motor, in addition to the fact that the thermoelectric element 131 is attached to the surface of the rotational force supply section 120, it is preferable that a thermoelectric element be installed on the flow chamber 110.

Specifically, as in the case of the rotational force supply section 120, a thermoelectric element 131 is installed on the surface of the flow chamber 110, and a heat dissipation plate 132 and a fan 133 are installed on the heat dissipation side of the thermoelectric element 131, whereby the heat generated in the flow chamber 110 can be efficiently dissipated.

As is apparent from the above description, the side feeding type external pump for LPG according to the present invention provides advantages in that, since the suction direction of working fluid corresponds to the rotation direction of the pump and a novel configuration allows the working fluid to flow through the pump, fuel suction efficiency is improved and cooling is enabled, thus reliably maintaining the performance of the pump.

Also, because the LPG fuel does not pass through the motor of the pump, which is hot, but passes only through a fluid feeding section, a substantial rise in the temperature of the fuel, which is otherwise caused in conventional pumps due to the passage of fuel through the pump, does not result. As a consequence, it is possible to avoid side effects such as abnormal rises in the temperature and pressure of the fuel and the deterioration of durability of the pump.

Moreover, since oil is circulated through an oil circulation line formed in a rotator, cooling efficiency is improved, and since thermoelectric elements are used, the cooling efficiency can be further improved.

## Claims

1. A side feeding type external pump for LPG comprising:
a fluid feeding section (140) which sucks and discharges working fluid by periodically changing a spatial volume and thereby feeds working fluid;
a flow chamber (110) into and from which working fluid is introduced and discharged in a direction tangential to a rotating direction of the fluid feeding section (140);
a rotational force supply section (120) in which a motor for supplying rotational force to the fluid feeding section (140) is built and which is isolated from the flow chamber (110);
a refrigerant inlet port (122) which is formed in the rotational force supply section (120) to receive a refrigerant and cool the rotational force supply section (120); and
a refrigerant discharge section (150) which is mounted to one end of the rotational force supply section (120) to discharge the refrigerant.

2. The external pump as set forth in claim 1, wherein the fluid feeding section (140) comprises:
a rotor (142) disposed in a cylinder (144) and rotated by a rotation shaft (121) of the rotational force supply section (120) to suck and discharge working fluid, and rollers (143) fitted in the rotor (142) on an outer circumference of the rotor (142);
a first plate (141) arrange on one end of the cylinder (144) to provide a flow path for sucking working fluid, and having a disc-shaped flat part (141a) and a projecting part (141b) which projects on a center portion of the disc-shaped flat part (141a) to define a circular shape and projects from the circular shape to opposite edge portions of the disc-shaped flat part (141a) to define sector shapes; and
a second plate (145) arranged on the other end of the cylinder (144) to provide a flow path for discharging sucked working fluid, and having a disc-shaped flat part (145a) and a projecting part (145b) which projects on a center portion of the disc-shaped flat part (145a) to define a circular shape and projects from the circular shape to opposite edge portions of the disc-shaped flat part (145a) to define sector shapes, the second plate (145) being defined through a center portion thereof with a hole (145c) through which the rotation shaft (121) of the rotational force supply section (120) passes.

3. The external pump as set forth in claim 1, further comprising:
a rotation shaft passage hole (115) defined through one end of the flow chamber (110) to allow the rotation shaft (121) extending from the rotational force supply section (120) to pass therethrough; and
a sealing member (116) fitted into the rotation shaft passage hole (115).

4. The external pump as set forth in claim 1, wherein a suction hole (112b) for introducing working fluid into the fluid feeding section (140) and a discharge hole (113b) for discharging working fluid from the fluid feeding section (140) to the outside are defined through a wall of the flow chamber (110) to communicate with an upper part of a space (111) for accommodating the fluid feeding section (140); and an inlet port (112a) and an outlet port (113a), which communicate with the suction hole (112b) and the discharge hole (113b), respectively, are mounted to the flow chamber (110).

5. The external pump as set forth in any one of claims 1 to 4, further comprising:
a first circulation line (R10) defined through a rotator (R) installed in the motor of the rotational force supply section (120) such that the first circulation line (R10) linearly extends and is inclined with respect to an axis of the rotator (R) while being maintained throughout its length at the same radial distance from the axis of the rotator (R).

6. The external pump as set forth in any one of claims 1 to 4, further comprising:
an external thread (121a) formed on the rotation shaft (121) fitted through a rotator (R) of the motor of the rotational force supply section (120); and
a second circulation line (R20) formed in the rotator (R) to be threadedly coupled with the external thread (121a).

7. The external pump as set forth in any one of claims 1 to 4, further comprising:
a flattened part (120a) formed on a portion of an outer surface of the rotational force supply section (120) to be flat;
a thermoelectric element (131) mounted to the flattened part (120a);
a heat dissipation plate (132) mounted to the thermoelectric element (131); and
a fan (133) mounted to the heat dissipation plate (132).

8. The external pump as set forth in any one of claims 1 to 4, further comprising:
a thermoelectric element (131) mounted to a surface of the flow chamber (110);
a heat dissipation plate (132) mounted to the thermoelectric element (131); and
a fan (133) mounted to the heat dissipation plate (132).
